# FASCICULE DE BREVET EUROPEEN

(11) **EP 2 704 234 B1**
(45) Date de publication et mention de la délivrance du brevet: **04.03.2015**
(21) Numéro de dépôt: 13182491.4
(22) Date de dépôt: 30.08.2013
(51) Int. Cl.: H01M 2/40, H01M 4/38, H01M 4/54, H01M 4/58, H01M 6/34, H01M 6/50, F42B 19/24

(54) **Générateur électrochimique pour engin naval, engin naval et procédé de génération electrique associé**
Elektrochemischer Generator für ein Schiff, Schiff und entsprechendes Stromerzeugungsverfahren
Electrochemical generator for naval craft, naval craft and related electrical generation method

(30) Priorité: 04.09.2012 FR 1258220
(43) Date de publication de la demande: 05.03.2014
(73) Titulaire: DCNS, 75015 Paris (FR)
(72) Inventeur: THIRIOT, André, Georges, Joseph, 83310 COGOLIN (FR); MADIER, Ludovic, 83380 Les ISSAMBRES (FR)
(74) Mandataire: Blot, Philippe Robert Emile

(56) Documents cités:
- US-A- 2 988 587
- US-A- 3 463 671
- US-A- 3 959 023

## Description

La présente invention concerne un générateur électrochimique pour engin naval selon le préambule de la revendication 1

US 2 988 587 décrit un générateur du type précité, destiné à la propulsion d'une torpille. US 3 959 023 et US 3 463 671 décrivent des générateurs électrochimiques alimentés par de l'eau de mer.

Un tel générateur est destiné par exemple à être utilisé pour la propulsion autonome d'un engin naval lancé à partir d'un navire de surface, ou d'un sous-marin.

L'engin naval est avantageusement une torpille. En variante, l'engin naval est par exemple une bouée sonore, un système de défense sous-marin, un équipement de récupération terre/mer, un drône de surveillance, et/ou une radio sonde météorologique.

Plus généralement, le générateur électrochimique peut être utilisé directement dans un navire de surface ou dans un sous-marin, par exemple dans le cas d'alimentation de secours avec un générateur Al / H2O.

Pour pouvoir disposer d'une énergie électrique suffisante, l'engin naval est parfois équipé d'un générateur électrochimique du type précité. Ce générateur fonctionne par exemple avec un électrolyte obtenu par dissolution d'un composé alcalin dans de l'eau au moment de l'utilisation du générateur, cette eau pouvant être de l'eau de mer. Le stockage de l'électrolyte sous forme anhydre rend le générateur apte à être stocké pendant une période de temps très longue dans des conditions variées, sans détérioration notable de sa capacité, de sa performance, ou de sa fiabilité.

Un tel générateur est en outre très léger avant son utilisation, ce qui est particulièrement important pour des torpilles lancées dans l'air. A titre d'exemple, un générateur électrochimique du type magnésium/chlorure d'argent est apte à délivrer une puissance électrique de l'ordre de 350 W/kg et une densité d'énergie de l'ordre de 50 Wh/kg.

Dans ce type de générateur, l'électrolyte présent entre chaque électrode doit être mis en circulation afin d'évacuer la chaleur produite par les réactions chimiques ainsi que les sous-produits de réaction.

Pour permettre la circulation d'électrolyte, une pompe mécanique est généralement utilisée. La pompe amène l'électrolyte dans le bloc électrochimique par une conduite d'amenée, puis fait circuler l'électrolyte dans les canaux intermédiaires du bloc, avant d'évacuer l'électrolyte hors du bloc par une conduite d'évacuation.

La pompe est généralement une motopompe alimentée électriquement par le générateur électrochimique ou par une alimentation auxiliaire lors du démarrage du système.

Un tel générateur ne donne pas entière satisfaction. En effet, la présence de la pompe alourdit le générateur. De plus, la pompe consomme de l'énergie pour engendrer le déplacement de l'électrolyte, et elle produit un bruit important qui peut diminuer significativement la discrétion de l'engin naval.

Un but de l'invention est donc d'obtenir un générateur électrochimique pour engin naval qui soit performant, et qui présente un rendement énergétique élevé, tout en produisant un bruit faible.

A cet effet, l'invention a pour effet un générateur électrochimique selon la revendication 1.

Le générateur selon l'invention peut comprendre l'une ou plusieurs des caractéristiques des revendications dépendantes 2 à 10.

L'invention a également pour objet un engin naval selon la revendication 11 ou 12.

L'invention a également pour objet un procédé selon la revendication 13

Le procédé selon l'invention peut comprendre l'une ou plusieurs des caractéristiques suivantes :
- le système de mise en circulation engendre un champ magnétique sensiblement perpendiculaire au flux d'électrons circulant entre l'anode et la cathode et sensiblement perpendiculaire à l'axe de circulation d'électrolyte dans le canal intermédiaire ;
- l'électrolyte circule exclusivement ou partiellement sous l'effet de la force de Lorentz engendrée par le système de mise en circulation.

L'invention sera mieux comprise à la lecture de la description qui va suivre, donnée uniquement à titre d'exemple, et faite en se référant aux dessins annexés, sur lesquels :
- la figure 1 est une vue schématique d'un premier engin naval muni d'un premier générateur électrochimique selon l'invention :
- la figure 2 est une vue schématique en perspective partielle du premier générateur électrochimique selon l'invention ;
- la figure 3 est une vue analogue à la figure 2 d'un deuxième générateur électrochimique selon l'invention.

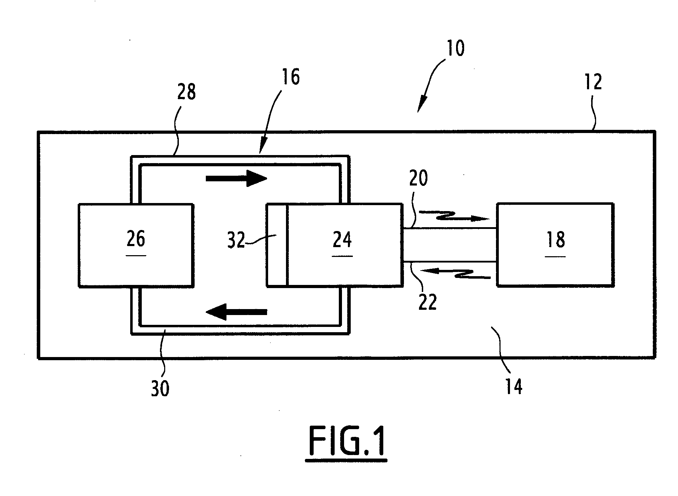

Un premier engin naval 10 selon l'invention est illustré schématiquement par la Figure 1. L'enfin naval 10 est avantageusement un engin sous-marin destiné à être immergé sous l'étendue d'eau.

En particulier, l'engin 10 est apte à se propulser de manière autonome.

Dans un exemple particulier, l'engin est une torpille présentant une charge explosive.

En variante, l'engin 10 est formé par une bouée sonore, un système de défense sous-marin, un équipement de récupération terre/mer, un drône de surveillance, et/ou une radio sonde météorologique.

Comme illustré schématiquement sur la Figure 1, l'engin naval 10 comporte une coque 12 délimitant un volume intérieur 14, un générateur électrochimique 16 selon l'invention, et une charge 18, alimentée électriquement par le générateur électrochimique 16. Le générateur 16 et la charge 18 sont avantageusement disposés dans la coque 12.

La charge 18 est par exemple un moteur de propulsion de l'engin 10 dans l'étendue d'eau. En variante, la charge 18 est une servitude telle que par exemple une motopompe auxiliaire de circulation de l'électrolyte, ou bien plus généralement un équipement électronique, électromécanique, électromagnétique, électroacoustique, électro-optique.

La charge 18 est raccordée électriquement au générateur 16 par une première ligne de connexion électrique 20 et par une deuxième ligne de connexion électrique 22.

Le générateur électrochimique 16 comporte un bloc électrochimique 24 propre à engendrer un courant électrique, un réservoir 26 d'électrolyte, une conduite 28 d'amenée d'électrolyte depuis le réservoir 26 vers le bloc électrochimique 24 et une conduite 30 d'évacuation d'électrolyte pour le ramener vers le réservoir 26.

Selon l'invention, le générateur électrochimique 16 comprend en outre un système 32 de mise en circulation de l'électrolyte depuis la conduite d'amenée 28, à travers le bloc électrochimique 24, vers la conduite d'évacuation 30, le système 32 étant propre à engendrer une circulation d'électrolyte par un principe magnétohydrodynamique.

L'électrolyte contenu dans le réservoir 26 est par exemple une solution alcaline, telle que de la soude obtenue par exemple par dissolution d'hydroxyde de sodium dans de l'eau de mer.

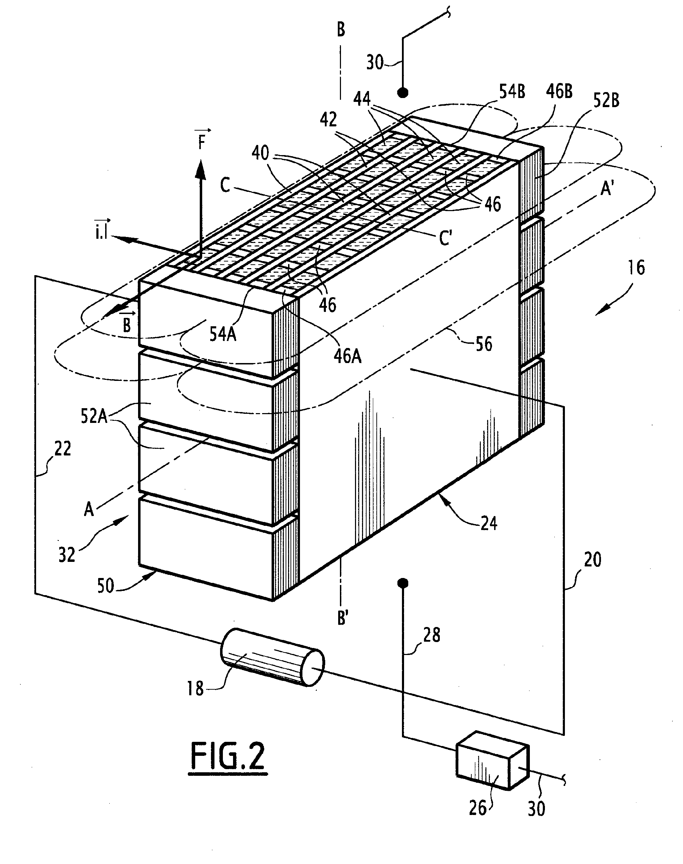

Un exemple de bloc électrochimique 24 est illustré par la Figure 2. Le bloc 24 comporte au moins une anode 40, au moins une cathode 42 placée en regard de chaque anode 40, l'anode 40 et la cathode 42 délimitant entre elles au moins un canal intermédiaire 44 de circulation d'électrolyte.

Le bloc 24 comporte en outre des espaceurs 46 interposés entre chaque anode 40 et chaque cathode 42 en regard, pour maintenir chaque anode 40 à l'écart de la cathode 42 en regard et pour obturer transversalement le ou chaque canal de circulation intermédiaire 44.

Dans l'exemple représenté sur la figure 2, le bloc 24 comporte une pluralité d'anodes 40 parallèles et une pluralité de cathodes parallèles 42 intercalées entre les anodes 40. Ainsi, une cathode 42 est intercalée entre chaque paire d'anodes 40 parallèles. Une anode 40 est intercalée entre chaque paire de cathodes parallèles 42.

Dans cet exemple, chaque anode 40 est formée par une plaque anodique, avantageusement une plaque métallique, s'étendant parallèlement à un axe longitudinal A-A' représenté horizontal sur la figure 2.

Chaque cathode 42 est formée par une plaque cathodique, avantageusement une plaque métallique, s'étendant parallèlement à l'axe A-A' et aux plaques anodiques adjacentes.

Chaque canal 44 est délimité de part et d'autre d'un axe parallèle à l'axe A-A', respectivement par une anode 40 et par une cathode 42.

Les espaceurs 46 sont disposés transversalement entre chaque anode 40 et chaque cathode 42 en regard. Ils sont avantageusement formés par des barrettes ou des picots en matériau isolant raccordant chaque anode 40 à une cathode 42.

Avantageusement, le bloc électrochimique 24 est une pile de type chlorure d'argent/magnésium. Dans ce cas, la cathode est formée de chlorure d'argent, et l'anode est formée à base de magnésium.

Dans une variante, le bloc électrochimique 24 est une pile de type aluminium/oxyde d'argent. Dans ce cas, la cathode est formée à partir d'oxyde d'argent, et l'anode est formée à partir d'aluminium.

Les espaceurs 46 s'étendent suivant un axe de circulation d'électrolyte B-B' perpendiculaire à l'axe longitudinal A-A', représenté vertical sur la figure 2. Ils délimitent transversalement les canaux de circulation 44 par rapport à l'axe A-A'.

Ainsi, les canaux 44 s'étendent sensiblement parallèlement à l'axe B-B' perpendiculairement à l'axe longitudinal du bloc 24.

Au moins un espaceur 46A d'extrémité obture transversalement un canal de circulation 44 situé entre les deux électrodes 40, 42 le long d'un premier bord longitudinal des électrodes 40, 42, et au moins un deuxième espaceur d'extrémité 46B obture transversalement un canal 44 situé le long d'un deuxième bord longitudinal des électrodes 40,42.

Dans l'exemple représenté sur la figure 2, chaque paire d'électrodes 40, 42 en regard et les espaceurs 46 disposés entre les électrodes 40, 42 définissent une pluralité de canaux 44 intermédiaires sensiblement parallèles les uns aux autres s'étendant parallèlement à l'axe B-B'.

Le nombre de canaux 44 est par exemple compris entre 1 et 1000.

La distance séparant chaque anode 40 de la cathode 42 en regard, prise perpendiculairement à l'axe A-A' est, par exemple comprise entre 0.001 mm et 5 mm.

La longueur des canaux 44, prise le long de l'axe B-B' est par exemple comprise entre 1 cm et 100 cm.

Chaque canal 44 est raccordé en amont à la conduite d'amenée 28, et est raccordé en aval à la conduite d'évacuation 30.

Ainsi, l'électrolyte est apte à circuler depuis la conduite d'amenée 28 dans chaque canal 44 le long de l'axe B-B', puis à être extrait hors du canal 44 par la conduite d'évacuation 30.

Selon l'invention, le système 32 de mise en circulation de l'électrolyte comporte un ensemble 50 de génération d'un champ magnétique dans chaque canal intermédiaire 44 pour provoquer le déplacement de l'électrolyte sous l'effet d'une force de Lorentz lors de la circulation d'un courant électrique entre l'anode 40 et la cathode 42.

Dans l'exemple représenté sur la figure 2, l'ensemble de génération 50 comporte au moins un premier aimant permanent 52A disposé longitudinalement d'un premier côté du bloc 24 et au moins un deuxième aimant permanent 52B disposé longitudinalement d'un autre côté du bloc 24.

Dans l'exemple représenté sur la Figure 2, le premier aimant permanent 52A et le deuxième aimant permanent 52B s'étendent perpendiculairement à l'axe longitudinal A-A'. Ils sont appliqués respectivement sur une première face transversale 54A du bloc 24 définie par les premiers bords longitudinaux des anodes 40 et des cathodes 42, et sur une deuxième face transversale 54B du bloc 24 définie par les deuxièmes bords longitudinaux des anodes 40 et des cathodes 42.

Chaque premier aimant permanent 52A présente une polarité opposée à celle d'un deuxième aimant permanent 52B en regard.

Dans cet exemple, l'ensemble de génération 50 comporte un premier groupe de premiers aimants permanents 52A disposés sur la première face 54A et un deuxième groupe de deuxièmes aimants permanents 52B disposés sur la deuxième face 54B. Chaque premier aimant 52A est situé en regard d'un deuxième aimant 52B.

L'ensemble de génération 50 est ainsi propre à engendrer un champ magnétique présentant des lignes de champ 56 s'étendant sensiblement parallèlement à l'axe longitudinal A-A' dans chaque canal 44. Chaque ligne de champ 56 s'étend sensiblement perpendiculairement à l'axe B-B' d'électrolyte dans le canal 44, et sensiblement parallèlement à chaque anode 40 et à chaque cathode 42 dans le canal 44.

Ainsi, lors d'une circulation de courant électrique entre l'anode 40 et la cathode 42, suivant un axe C-C' perpendiculaire à l'axe longitudinal A-A' et à l'axe de circulation B-B', le champ magnétique engendré par l'ensemble de génération 50 est propre à créer une force de Lorentz *̅F̅*̅ définissant un trièdre direct avec le vecteur champ magnétique *̅B̅*̅, et le vecteur courant *̅i̅l̅*̅.

Cette force de Lorentz *̅F̅*̅ s'étend avantageusement sensiblement parallèlement à l'axe B-B' de circulation défini dans chaque canal 44. Elle est apte à convoyer l'électrolyte en le pompant à travers le canal 44 depuis la conduite d'amenée 28 vers la conduite d'évacuation 30.

Le fonctionnement du générateur électrochimique 16 dans le premier engin naval 10 va maintenant être décrit.

Initialement, le générateur 16 est inactif. Lorsque la charge 18 doit être alimentée électriquement, le générateur 16 est alors activé. Des réactions chimiques d'oxydoréduction se produisent sur chaque anode 40 et sur chaque cathode 42 dans l'électrolyte. Ces réactions d'oxydoréduction engendrent un courant d'électrons depuis chaque anode 40 vers chaque cathode 42. Ce courant électrique est collecté par chaque cathode 42 et circule dans la charge 18 à travers la première ligne de connexion 20, pour alimenter électriquement la charge 18, puis retourne vers chaque anode 40 à travers la deuxième ligne de connexion électrique 22.

La circulation de courant électrique entre chaque anode 40 et chaque cathode 42 à travers l'électrolyte dans le canal 44 engendre un vecteur courant *̅i̅l̅*̅ perpendiculaire à l'axe A-A', et perpendiculaire à l'axe B-B' de circulation de l'électrolyte. Les aimants permanents 52A, 52B engendrent un champ magnétique *̅B̅*̅ sensiblement parallèle à l'axe A-A'. Une force de Lorentz *̅F̅*̅ est donc créée dans chaque canal 44 sensiblement perpendiculairement à l'axe B-B'.

Dans l'exemple représenté sur la figure 2, la force de Lorentz *̅F̅*̅ engendrée s'étend sensiblement verticalement, parallèlement à l'axe du canal B-B'. Cette force entraîne une mise en circulation de l'électrolyte à travers le canal 44 depuis la conduite d'amenée 28, vers la conduite d'évacuation 30.

L'électrolyte présent dans chaque canal 44 est donc renouvelé et circule donc lors de la génération de courant électrique. Ceci évacue les calories engendrées par effet Joule, et assure également un renouvellement de l'électrolyte présent au contact de chaque électrode 40, 42.

Dans le mode de réalisation représenté sur la figure 2, aucune autre pompe n'est nécessaire pour effectuer le pompage de l'électrolyte 44 à travers le bloc 24.

Dans une variante, une motopompe de faible capacité est interposée entre le réservoir 26 et le bloc électrochimique 24 pour fournir partiellement une force de pompage de l'électrolyte.

Un exemple d'application est décrit par les paramètres ci-dessous.

Dans cet exemple d'application, l'électrolyte est de l'eau de mer. La viscosité cinématique de l'électrolyte est égale à environ 10⁻⁶ m² /s. La densité de l'électrolyte est sensiblement égale à 1250 kg/m³. La distance séparant chaque anode 40 de la cathode 42 est égale à 0,5 mm. La densité de courant est de l'ordre de 0,5.10⁴ A/m².

Le tableau ci-dessous illustre le pompage obtenu pour différents champs magnétiques appliqués dans le bloc 24.

| | | | | |
|---|---|---|---|---|
| **Champ magnétique B (T)** | 0,03 | 0,1 | 1 | 3 |
| **Vitesse linéique moyenne (cm/s)** | 0,25 | 0,83 | 8,3 | 25 |

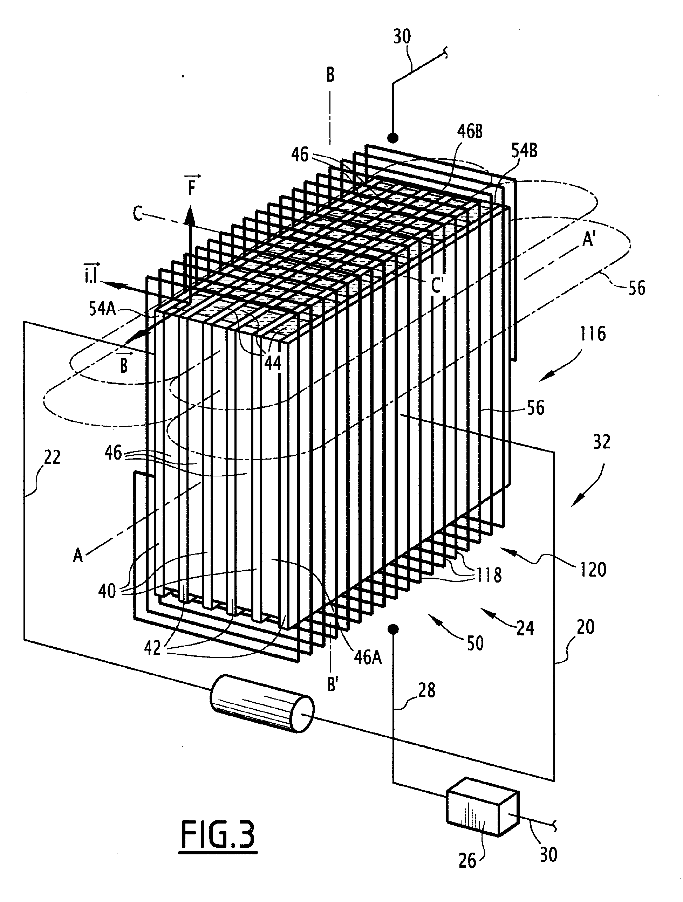

Un deuxième générateur électrochimique 116 selon l'invention est illustré par la figure 3.

A la différence du premier générateur 16, l'ensemble de génération 50 de champ magnétique comporte au moins une spire 118 entourant le bloc 24 dans un plan perpendiculaire à l'axe longitudinal A-A'.

Dans l'exemple représenté sur la figure 3, l'ensemble 50 comporte une pluralité de spires 118 successives espacées longitudinalement le long de l'axe A-A', sur sensiblement sur toute la longueur du bloc 24. Chaque spire 118, lorsqu'elle est parcourue par un courant électrique, engendre un champ magnétique s'étendant sensiblement perpendiculairement à l'axe B-B' et parallèlement à l'axe A-A'.

Dans l'exemple représenté sur la figure 3, les spires 118 forment un solénoïde 120 entourant le bloc 24.

Le fonctionnement du deuxième générateur 116 est sensiblement analogue à celui du premier générateur 16. A la différence du premier générateur 16, lorsque le générateur 116 est activé, chaque spire 118 est alimentée par un courant électrique qui la parcourt. Ce courant électrique est avantageusement fourni par le générateur 116. Le courant électrique circulant dans chaque spire 118 engendre un champ magnétique sensiblement parallèle à l'axe A-A'. Sous l'effet de ce champ magnétique, une force de Lorentz s'étendant parallèlement à l'axe B-B' de circulation est créée dans chaque canal 44, ce qui entraîne la circulation de l'électrolyte à travers le canal 44 depuis la conduite d'amenée 28 vers la conduite d'évacuation 30.

Les générateurs électrochimiques 16, 116 selon l'invention sont donc aptes à fournir une quantité substantielle d'énergie électrique avec un rendement élevé. Ils sont aptes à fonctionner avec des pompes de faible capacité, voire même sans pompe, ce qui améliore le rendement électrique du générateur 16, 116, et diminue son bruit.

Dans le cas où le générateur 16, 116 est dépourvu de pompe, le bruit engendré par le générateur 16, 116 devient quasi négligeable.

## Revendications

1. Générateur électrochimique (16 ; 116) pour engin naval (10) comprenant :
- un bloc électrochimique (24) comprenant au moins une anode (40), au moins une cathode (42) située en regard de chaque anode (40), chaque cathode (42) et chaque anode (40) en regard délimitant entre elles au moins un canal intermédiaire (44) de circulation d'un électrolyte ;
- une conduite (28) d'amenée d'électrolyte dans le canal intermédiaire (44) ;
- une conduite (30) d'évacuation d'électrolyte hors du canal intermédiaire (44) ;
- un système (32) de mise en circulation de l'électrolyte depuis la conduite d'amenée (28), à travers le canal intermédiaire (44), vers la conduite d'évacuation (30) ;
**caractérisé en ce que** le système de mise en circulation (32) comporte un ensemble (50) de génération d'un champ magnétique dans chaque canal intermédiaire (44), propre à provoquer le déplacement d'électrolyte au moins partiellement par l'effet d'une force de Lorentz lors de la circulation d'un courant électrique entre l'anode (40) et la cathode (42).

2. Générateur (16) selon la revendication 1, **caractérisé en ce que** l'ensemble de génération (50) comporte au moins un aimant permanent (52A ; 52B), avantageusement au moins deux aimants permanents (52A ; 52B) situés en regard l'une de l'autre.

3. Générateur (16) selon la revendication 1, **caractérisé en ce que** le système de mise en circulation comporte au moins une spire (118) destinée à être parcourue par un courant électrique, avantageusement une pluralité de spires (118) destinées à être parcourues par un courant électrique, chaque spire (118) étant disposée au moins en partie autour du canal intermédiaire (44), le courant électrique étant avantageusement fourni par le générateur (16 ; 116) lui-même et/ou par une source auxiliaire lors d'une phase de mise en route.

4. Générateur (16 ; 116) selon l'une quelconque des revendications précédentes, **caractérisé en ce que** l'anode (40) est formée par une plaque anodique, la cathode (42) étant formée par une plaque cathodique située en regard de la plaque anodique, le canal intermédiaire (44) étant délimité entre les plaques.

5. Générateur (16 ; 116) selon la revendication 4, **caractérisé en ce qu'**il comporte une pluralité d'espaceurs intermédiaires (46) en matériau isolant électriquement, disposés à travers le canal intermédiaire (44) entre chaque plaque anodique et la plaque cathodique en regard.

6. Générateur (16 ; 116) selon l'une quelconque des revendications précédentes, **caractérisé en ce qu'**il comporte un réservoir (26) d'électrolyte raccordé en amont à la conduite d'amenée (28), la conduite d'évacuation (30) débouchant en aval dans le réservoir (26).

7. Générateur (16 ; 116) selon l'une quelconque des revendications précédentes, **caractérisé en ce que** le canal intermédiaire (44) est rempli d'électrolyte, l'électrolyte étant formé par de l'eau de mer ou une solution de soude obtenue par dissolution d'hydroxyde de sodium dans de l'eau de mer.

8. Générateur (16 ; 116) selon l'une quelconque des revendications précédentes, **caractérisé en ce que** la cathode (42) est formée à partir d'un matériau choisi parmi un oxyde d'argent, un chlorure d'argent.

9. Générateur (16 ; 116) selon la revendication 8, **caractérisé en ce que** l'anode (40) est formée à partir d'un matériau choisi parmi l'aluminium, le magnésium.

10. Générateur (16 ; 116) selon l'une quelconque des revendications précédentes, **caractérisé en ce que** le système (32) de mise en circulation d'électrolyte est propre à faire circuler l'électrolyte dans le canal intermédiaire (44) exclusivement par l'effet d'une force de Lorentz, sans pompage mécanique de l'électrolyte.

11. Engin naval (10), **caractérisé en ce qu'**il comporte un générateur (16 ; 116) selon l'une quelconque des revendications précédentes, et une charge (18) raccordée électriquement au générateur (16 ; 116).

12. Engin naval (10) selon la revendication 11, **caractérisé en ce qu'**il forme une torpille, un drône ou tout autre équipement sous-marin destiné à être lancé à partir d'un navire de surface, ou d'un sous-marin.

13. Procédé de génération électrique dans un engin naval (10), le procédé comprenant les étapes suivantes :
- fourniture d'un générateur (16 ; 116) selon l'une quelconque des revendications 1 à10;
- circulation d'un courant électrique entre l'anode (40) et la cathode (42) à travers l'électrolyte ;
- génération d'un champ magnétique dans chaque canal intermédiaire (44) par l'ensemble de génération (50) du système (32) de mise en circulation ;
- déplacement de l'électrolyte à travers le canal intermédiaire (44) depuis la conduite d'amenée (28) vers la conduite d'évacuation (30) au moins partiellement sous l'effet de la force de Lorentz résultant de la circulation du courant électrique entre l'anode (40) et la cathode (42) et du champ magnétique engendré par l'ensemble de génération (50).

## Patentansprüche

1. Elektrochemischer Generator (16; 116) für ein Wasserfahrzeug (10) aufweisend:
- einen elektrochemischen Block (24) aufweisend mindestens eine Anode (40), mindestens eine Kathode (42), die sich gegenüber jeder Anode (40) befindet, wobei jede Kathode (42) und jede gegenüberliegende Anode (40) zwischen sich mindestens einen dazwischenliegenden Kanal (44) zur Zirkulation eines Elektrolyts begrenzen;
- eine Leitung (28) zum Leiten des Elektrolyts in den dazwischenliegenden Kanal (44):
- eine Leitung (30) zum Abtransport des Elektrolyts aus dem dazwischenliegenden Kanal (44);
- ein System (32) zum Zirkulieren des Elektrolyts von der Leitung zum Leiten (28) über den dazwischenliegenden Kanal (44) zu der Leitung zum Abtransport (30);
dadurch charakterisiert, dass das System zum Zirkulieren (32) eine Anordnung (50) zum Erzeugen eines magnetischen Felds in jedem dazwischenliegenden Kanal (44) aufweist, das geeignet ist, die Bewegung des Elektrolyts zumindest tewilweise durch den Effekt einer Lorentzkraft anlässlich der Zirkulation eines elektrischen Stroms zwischen der Anode (40) und der Kathode (42) herbeizuführen.

2. Generator (16) gemäß Anspruch 1, dadurch charakterisiert, dass die Anordnung zum Erzeugen (50) mindestens einen Dauermagnet (52A; 52B), vorzugsweise mindestens zwei Dauermagneten (52A; 52B), die einander gegenüberliegen, aufweist.

3. Generator (16) gemäß Anspruch 1, dadurch charakterisiert, dass das System zum Zirkulieren mindestens eine Windung (118), die dazu vorgesehen ist, von einem elektrischen Strom durchflossen zu werden, vorzugsweise eine Mehrzahl von Windungen (118), die dazu vorgesehen sind, von einem elektrischen Strom durchlaufen zu werden, aufweist, wobei jede Windung (118) zumindest teilweise um den dazwischenliegenden Kanal (44) angeordnet ist und der elektrische Strom vorzugsweise von dem Generator (16; 116) selbst und/oder durch eine Hilfsquelle bei einer Einschaltphase bereitgestellt wird.

4. Generator (16; 116) gemäß einem der vorhergehenden Ansprüche, dadurch charakterisiert, dass die Anode (40) durch einen anodische Platte gebildet wird, die Kathode (42) durch eine kathodische Platte, die sich gegenüber der anodischen Platte befindet, gebildet wird und der dazwischenliegende Kanal (44) zwischen den Platten durch die Platten begrenzt ist.

5. Generator (16; 116) gemäß Anspruch 4, dadurch charakterisiert, dass er eine Mehrzahl von dazwischenliegenden Abstandhaltern (46) aus einem elektrisch isolierenden Material aufweist, die quer durch den dazwischenliegenden Kanal (44) zwischen jeder anodischen Platte und der gegenüberliegenden kathodischen Platte angeordnet sind.

6. Generator (16; 116) gemäß einem der vorhergehenden Ansprüche, dadurch charakterisiert, dass er ein Elektrolytreservoir (26) aufweist, dass stromaufwärts mit der Leitung zum Leiten (28) verbunden ist, wobei die Leitung zum Abtransport (30) stromabwärts in dem Reservoir (26) mündet.

7. Generator (16; 116) gemäß einem der vorhergehenden Ansprüche, dadurch charakterisiert, dass der dazwischenliegende Kanal (44) mit Elektrolyt gefüllt ist, wobei das Elektrolyt durch Meerwasser oder eine Natronlösung gebildet wird, die durch Auflösung von Natriumhydroxid im Meerwasser erhalten wird.

8. Generator (16; 116) gemäß einem der vorhergehenden Ansprüche, dadurch charakterisiert, dass die Kathode (42) ausgehend von einem Material, ausgewählt aus einem Silberoxid und einem Silberchlorid, gebildet wird.

9. Generator (16; 116) gemäß Anspruch 8, dadurch charakterisiert, dass die Anode (40) ausgehend von einem Material, ausgewählt aus Aluminium und Magnesium, gebildet wird.

10. Generator (16; 116) gemäß einem der vorhergehenden Ansprüche, dadurch charakterisiert, dass das System (32) zum Zirkulieren des Elektrolyts geeignet ist, das Elektrolyt in dem dazwischenliegenden Kanal (44) ausschließlich durch den Effekt einer Lorentzkraft ohne mechanisches Pumpen des Elektrolyts zu Zirkulieren.

11. Wasserfahrzeug (10), dadurch charakterisiert, dass es einen Generator (16; 116) gemäß einem der vorhergehenden Ansprüche und eine Last (18) aufweist, die elektrisch mit dem Generator (16; 116) verbunden ist.

12. Wasserfahrzeug (10) gemäß Anspruch 11, dadurch charakterisiert, dass es ein Torpedo, eine Drohne oder jegliches andere Unterwassergerät, das dazu vorgesehen ist, von einem Schiff an der Oberfläche oder einem Unterseeboot gestartet zu werden, ist.

13. Verfahren zum Erzeugung von Elektrizität in einem Wasserfahrzeug (10), wobei das Verfahren die folgenden Schritte aufweist:
- Bereitstellen eines Generators (16; 116) gemäß einem der Ansprüche 1 bis 10;
- Zirkulieren eines elektrischen Stroms zwischen der Anode (40) und der Kathode (42) durch das Elektrolyt;
- Erzeugen eines magnetischen Felds in jedem dazwischenliegenden Kanal (44) durch die Anordnung zum Erzeugen (50) des Systems (32) zum Zirkulieren;
- Bewegen des Elektrolyts durch den dazwischenliegenden Kanal (44) von der Leitung zum Leiten (28) zu der Leitung zum Abtransport (30) mindestens teilweise unter dem Effekt der Lorentzkraft, die aus dem Zirkulieren des elektrischen Stroms zwischen der Anode (40) und der Kathode (42) und dem magnetischen Feld, verursacht durch die Anordnung zum Erzeugen, resultiert.

## Claims

1. Electrochemical generator (16; 116) for a sea-going machine (10), comprising:
- an electrochemical block (24) comprising at least one anode (40), at least one cathode (42) located facing each anode (40), each cathode (42) and each anode (40) that face one another delimiting between them at least one intermediate channel (44) for circulation of an electrolyte;
- a conduit (28) supplying electrolyte into the intermediate channel (44);
- a conduit (30) for removal of electrolyte from the intermediate channel (44);
- a system (32) for circulating the electrolyte from the supply conduit (28), through the intermediate channel (44) and to the removal conduit (30);
**characterised in that** the circulating system (32) includes a unit (50) for generation of a magnetic field in each intermediate channel (44), capable of bringing about the movement of electrolyte at least partially by the effect of a Lorentz force when an electric current passes between the anode (40) and the cathode (42).

2. Generator (16) according to claim 1, **characterised in that** the generating unit (50) includes at least one permanent magnet (52A; 52B), advantageously at least two permanent magnets (52A; 52B) located facing one another.

3. Generator (16) according to claim 1, **characterised in that** the circulating system includes at least one coil turn (118) arranged for an electric current to pass through, advantageously a plurality of coil turns (118) arranged for an electric current to pass through, each coil turn (118) being arranged at least in part around the intermediate channel (44), the electric current being advantageously supplied by the generator (16; 116) itself and/or by an auxiliary source during a start-up phase.

4. Generator (16; 116) according to any one of the preceding claims, **characterised in that** the anode (40) is formed by an anode plate, the cathode (42) being formed by a cathode plate located facing the anode plate, the intermediate channel (44) being delimited between the plates.

5. Generator (16; 116) according to claim 4, **characterised in that** it includes a plurality of intermediate spacers (46) of electrically insulating material arranged through the intermediate channel (44) between each anode plate and the cathode plate facing it.

6. Generator (16; 116) according to any one of the preceding claims, **characterised in that** it includes an electrolyte reservoir (26) connected to the supply conduit (28) upstream thereof, the removal conduit (30) leading, downstream thereof, into the reservoir (26).

7. Generator (16; 116) according to any one of the preceding claims, **characterised in that** the intermediate channel (44) is filled with electrolyte, the electrolyte being formed of sea-water or a solution of sodium hydroxide obtained by dissolution of sodium hydroxide in sea-water.

8. Generator (16; 116) according to any one of the preceding claims, **characterised in that** the cathode (42) is formed by a material selected from a silver oxide and a silver chloride.

9. Generator (16; 116) according to claim 8, **characterised in that** the anode (40) is formed starting from a material selected from aluminium and magnesium.

10. Generator (16; 116) according to any one of the preceding claims, **characterised in that** the electrolyte circulation system (32) is capable of causing the electrolyte to circulate in the intermediate channel (44) exclusively by the effect of a Lorentz force, without mechanical pumping of the electrolyte.

11. Sea-going machine (10), **characterised in that** it includes a generator (16; 116) according to any one of the preceding claims, and a load (18) electrically connected to the generator (16; 116).

12. Sea-going machine (10) according to claim 11, **characterised in that** it forms a torpedo, drone or any other submarine equipment intended to be launched from a surface or submarine vessel.

13. Method of electrical generation in a sea-going machine (10), the method including the following steps:
- supplying a generator (16; 116) according to any one of claims 1 to 10;
- circulating an electric current between the anode (40) and the cathode (42) through the electrolyte;
- generating a magnetic field in each intermediate channel (42) by means of the generating unit (50) of the circulating system (32);
- moving the electrolyte through the intermediate channel (44) from the supply conduit (28) to the removal conduit (30) at least partially under the effect of the Lorentz force resulting from circulation of the electric current between the anode (40) and the cathode (42) and the magnetic field produced by the generating unit (50).
